# EUROPÄISCHE PATENTANMELDUNG

(11) **EP 1 519 307 A1**
(43) Veröffentlichungstag der Anmeldung: **30.03.2005**
(21) Anmeldenummer: 03021397.9
(22) Anmeldetag: 22.09.2003
(51) Int. Cl.: G06K 19/077, B42D 15/10, G07C 9/00, G07D 7/00

(54) **Kennzeichnungsvorrichtung für Ausweisdokumente und entsprechendes Kennzeichnungsverfahren**

(71) Anmelder: SIEMENS AKTIENGESELLSCHAFT, 80333 München (DE)
(72) Erfinder: Hartig, Michael, 80801 - München (DE); Luhn, Achim, Dr., 82194 Gröbenzell (DE)

(57) **Zusammenfassung**

Ausweisdokumente sollen sicher gekennzeichnet werden können. Dazu wird eine Kennzeichnungsvorrichtung bzw. ein elektronisches Siegel (1) vorgeschlagen, in dem Informationen über das Ausweisdokument und Zusatzdaten wie biometrische Daten über die betreffende Person und/oder Visadaten speicherbar sind. Damit kann das Siegel beispielsweise eindeutig dem gekennzeichneten Ausweisdokument bzw. der gekennzeichneten Person zugeordnet werden. Zur Verifikation der im Siegel gespeicherten Daten können diese auch in einer zentralen Datenbank hinterlegt werden. Die Daten sind beispielsweise zur Verifikation aus dem Siegel (1) durch einen Transponder (2, 3, 4) berührungslos auslesbar. Damit ist eine automatisierte Erfassung möglich.

## Beschreibung

Die vorliegende Erfindung betrifft eine Kennzeichnungsvorrichtung zum Aufbringen auf ein Ausweisdokument. Darüber hinaus betrifft die vorliegende Erfindung ein entsprechendes Verfahren zum Kennzeichnen eines Ausweisdokuments.

Es besteht der Bedarf, Personen in gewissen Situationen rasch und mit hoher Sicherheit eindeutig identifizieren zu können. Dies ist beispielsweise bei Straßenkontrollen oder an Grenzübergängen der Fall. Die manuelle Kontrolle von Ausweisdokumenten, wie sie zur Identifikation von Personen und zur Überprüfung von Berechtigungen, z. B. Visa, durchgeführt werden, sind sehr aufwändig und mühsam. Darüber hinaus besteht das Problem, dass die Ausweisdokumente gefälscht sein können und somit eine eindeutige Identifikation der betreffenden Personen nicht möglich ist.

Ähnliche Probleme bestehen im Straßenverkehr, wenn Fahrzeuge eindeutig identifiziert werden sollen. Auf diesem Gebiet sind automatische Fahrzeugidentifikationssysteme entwickelt worden, wie sie beispielsweise aus der Druckschrift GB 2 227 866 bekannt sind. Dabei wird eine Identifikationskarte, von der aus eine charakteristische Identifikationsnummer und eine Fahrzeugnummer per Funk oder optisch übertragen werden können, auf einem motorbetriebenen Fahrzeug angebracht. Zum Lesen der Identifikationsnummer und der Fahrzeugnummer von der Identifikationskarte wird ein entsprechender Identifikationskartenleser verwendet. Gleichzeitig wird das Nummernschild des Kraftfahrzeugs optisch erfasst. Beide Signale werden miteinander verglichen und entsprechende Steuervorgänge ausgeführt.

Des Weiteren ist aus dem Dokument WO 99/19170 ein Fahrzeugkennzeichen mit berührungslos lesbarem, elektronischem Datenträger und ein entsprechendes Herstellungsverfahren bekannt. Auf diesem Datenträger sind die Informationen des Nummernschilds gespeichert, damit sie automatisch auslesbar sind. Damit kann eine schnellere Zuordnung des Kraftfahrzeugkennzeichens zu offiziellen Begleitdokumenten eines Fahrzeugs oder anderen Datensätzen erfolgen.

Darüber hinaus sind berührungslos auslesbare Firmenausweise bekannt, bei denen beispielsweise die Personalnummer beim Betreten des Firmengeländes ausgelesen wird. Ferner sind in Macau Chipkarten-Personalausweise eingeführt, die ähnlich wie eine Kreditkarte aufgebaut und elektronisch auslesbar sind. Die in den Ausweisen elektronisch gespeicherten Daten umfassen die Sichtdaten eines konventionellen Ausweises und darüber hinaus Fingerabdruckinformationen.

Zur Einreise in ein visumpflichtiges Land ist es notwendig, von diesem Land einen Sichtvermerk, d. h. ein Visum, in den Reisepass eintragen zu lassen. Dieser Sichtvermerk trägt beispielsweise die Informationen über das Land, die Gültigkeit des Visums, die ausgebende Stelle und dergleichen. Dabei unterscheidet sich die visumausgebende Stelle von der passausgebenden Stelle, da sie jeweils für ihre eigenen Länder tätig sind.

Auch bei der Einreise in visumpflichtige Länder besteht der Bedarf, die Visa elektronisch erfassen zu können. Dabei ist jedoch auch ein hoher Sicherheitsstandard notwendig.

Die Aufgabe der vorliegenden Erfindung besteht somit darin, eine Kennzeichenvorrichtung vorzuschlagen, mit der eine Verknüpfung zwischen dem Kennzeichen und dem gekennzeichneten Ausweisdokument und/oder die betreffende Person auf eindeutige Weise gegeben ist. Darüber hinaus soll ein entsprechendes Verfahren zum Kennzeichnen eines Ausweisdokuments und/oder der betreffenden Person angegeben werden.

Erfindungsgemäß wird diese Aufgabe gelöst durch eine Kennzeichnungsvorrichtung zum Aufbringen auf ein Ausweisdokument mit einer Trägereinrichtung, die an dem Ausweisdokument befestigbar ist, zum Tragen von Elektronikkomponenten, einer Speichereinrichtung, die in oder an der Trägereinrichtung angebracht ist, zum Speichern von direkten und/oder indirekten Daten über das Ausweisdokument und von Zusatzdaten und einer Übertragungseinrichtung, die in oder an der Trägereinrichtung angebracht ist, zum drahtlosen Ein- und Auslesen von Daten aus der Speichereinrichtung.

Ferner ist erfindungsgemäß vorgesehen ein Verfahren zum Kennzeichnen eines Ausweisdokuments durch Speichern von direkten und/oder indirekten Daten über das Ausweisdokument und von Zusatzdaten in einer Speichereinrichtung, die in oder an einer Trägereinrichtung angebracht ist und die drahtlose Datenkommunikation ermöglicht, und Befestigen der Trägereinrichtung an dem Ausweisdokument.

Entsprechend der vorliegenden Erfindung ist es möglich, nicht nur zusätzliche Daten zu dem Ausweisdokument direkt in der Speichereinrichtung abzulegen, die unter Umständen sehr umfangreich sein können. Vielmehr ist es auch möglich, reine Bezugsinformationen, also indirekte Informationen über das Ausweisdokument bzw. die betreffende Person in der Speichereinrichtung der Kennzeichnungsvorrichtung abzulegen und die direkten Daten im Bedarfsfall aus einer zentralen Speichereinrichtung abzurufen.

Die in der Speichereinrichtung gespeicherten Daten können eine Abbildung des Ausweisdokuments oder eines Teils des Ausweisdokuments oder aber eine Bezugsinformation zu dieser Abbildung umfassen. So ist es beispielsweise möglich, dass ein Bild oder eine entsprechende Bezugsinformation zu einem Bild des Ausweisdokuments oder des Passfotos in der Kennzeichnungsvorrichtung abgespeichert ist, so dass durch Laden des entsprechenden Bilds gegebenenfalls aus einem zentralen Bildspeicher rasch überprüft werden kann, ob das so gekennzeichnete Ausweisdokument auch mit dem registrierten Ausweisdokument übereinstimmt oder ob der Bezug zu der betroffenen Person korrekt ist.

Darüber hinaus können die Zusatzdaten Sicherheitsinformationen und/oder Berechtigungsinformationen umfassen. Somit ist gewährleistet, dass das Auslesen der Daten aus dem Speicher sicher gestaltet und nur für berechtigte Personen möglich gemacht werden kann.

Ferner können die Zusatzdaten biometrische Daten über die betreffende Person und/oder Visadaten umfassen. Dadurch lässt sich eine eindeutige Beziehung zwischen dem Ausweisdokument und der betreffenden Person bzw. dem Ausweisdokument und dem ausgestellten Visum herstellen.

Die Zusatzdaten können aber auch Daten über den Ausstellungsprozess des Ausweisdokuments und/oder eines Visums umfassen. Auf diese Weise kann die Echtheit des Ausweisdokuments bzw. des Visums leichter nachgewiesen werden.

Optional besitzen die Daten in der Speichereinrichtung Bezugsinformationen über eine Beziehung des Ausweisdokuments zu einem externen Objekt, insbesondere einem beweglichen Gut. Damit kann ein wertvolles Gut eindeutig mit einer Person, die in dem Ausweisdokument beschrieben ist, verknüpft werden, so dass beispielsweise nur eine bestimmte Person ein spezielles Gut, z. B. Waffen, an einer Grenze ausführen oder einführen kann.

Die in der Kennzeichnungsvorrichtung gespeicherten und über die Übertragungseinrichtung zu übertragenden Daten sind optional verschlüsselt. Dies vermindert weiterhin die Gefahr eines unberechtigten Zugriffs. Ferner sollte die Übertragung von einer Leseeinheit, die zum Auslesen der Kennzeichnungsvorrichtung dient, zu einer zentralen Verarbeitungseinheit verschlüsselt erfolgen.

Die erfindungsgemäße Kennzeichnungsvorrichtung kann ferner mehrteilig sein, wobei jedes Teil jeweils eine Träger-, Speicher- und Übertragungseinrichtung umfasst und die zu speichernden Daten auf die mehreren Teile aufgeteilt sind. Durch diese Datensplittung kann ein zusätzliches Maß an Sicherheit gewährleistet werden.

Zur Datenübertragung kann die Übertragungseinrichtung einen passiven Transponder aufweisen. Dieser hat den Vorteil einer berührungslosen Datenübertragung bei gleichzeitigem Verzicht auf eine eigene Energieversorgung im Gegensatz zu einem aktiven Transponder. Alternativ oder zusätzlich zu dem Transpondersystem kann die Kennzeichnungsvorrichtung auch ein Oberwellenfilterelement aufweisen, in dem die notwendigen Daten gespeichert sind, und das ebenfalls berührungslos auslesbar ist.

Vorteilhafterweise besitzt die Trägereinrichtung mindestens eine "Sollbruchstelle", so dass sie beim Ablösen von dem Ausweisdokument zerstört oder beschädigt wird. Auf diese Weise kann zusätzlich verhindert werden, dass das erfindungsgemäße Kennzeichen unberechtigt von einem Ausweisdokument auf ein anderes Ausweisdokument übertragen wird.

Vorzugsweise besteht die Trägereinrichtung außerdem im Wesentlichen aus einem Kunststofffolienmaterial. Dadurch kann die Kennzeichnungsvorrichtung auf nahezu beliebige Oberflächen aufgebracht werden, ist leicht herzustellen und zu handhaben.

Die erfindungsgemäße Kennzeichnungsvorrichtung kann auch eine Kennzeichnungsfläche aufweisen. Diese Kennzeichnungsfläche kann als optische Speichereinrichtung dienen oder zusätzlich zu einem elektronischen Speicher auf der Kennzeichnungsvorrichtung angebracht sein. In diesem Fall ist die Kennzeichnungsfläche an der Oberfläche der Trägereinrichtung angeordnet, damit die Kennzeichnungsvorrichtung optisch, gegebenenfalls automatisch, auslesbar ist. Hierzu kann es günstig sein, wenn die Kennzeichnungsfläche bedruckbar und/oder bestempelbar ist. Auf diese Weise kann beispielsweise auf der Kennzeichnungsfläche ein 2D-Bar-Code und/oder ein Hologramm zur Bereitstellung der Daten bzw. Sicherheitsmerkmale aufgebracht werden.

Vorzugsweise ist die Trägereinrichtung selbstklebend, so dass sie ohne großen Aufwand auf das zu kennzeichnende Ausweisdokument aufgebracht werden kann.

Die erfindungsgemäße Kennzeichnungsvorrichtung ist günstigerweise in eine PKI- und/oder VPN-Infrastruktur integrierbar. Dadurch kann ein hohes Maß an Datenübertragungssicherheit gewährleistet werden.

Zur Verifikation der Daten in der Kennzeichnungsvorrichtung, die ein elektronisches Siegel darstellen, sollten diese Daten ganz oder teilweise auch in einem zentralen Datenhaltungssystem abgelegt werden. D. h. in dem zentralen System sollte ein Abbild des elektronischen Siegels existieren. Dort können die Daten dann zum Zwecke des Vergleichs abgerufen werden. Für den Vergleich kann es günstig sein, wenn die Daten mittels Hash-Code eindeutig codiert und verifiziert werden.

Die Erfindung ermöglicht nun, dass ein sicheres elektronisches Visum in einem Ausweisdokument angebracht werden kann. Dabei gibt eine Stelle eines ersten Landes das Ausweisdokument bzw. den Pass aus und eine Stelle eines zweiten Landes trägt das Visum bzw. Siegel in das Ausweisdokument ein. Auch weitere Länder können eigene Siegel in denselben Pass einbringen, da die Verfahren zum Lesen und Verschlüsseln der Daten von Land zu Land in der Regel unterschiedlich sein werden. Dies bedeutet, dass das Ausweisdokument bei dieser Verwendung von einem fremden Land modifiziert bzw. aufgewertet wird.

Durch das nachträgliche Aufbringen der Kennzeichnungsvorrichtung in das Ausweisdokument kann aber auch die Regierung eines Landes oder aber ein Unternehmen die bestehenden Ausweisdokumente kostengünstig aufwerten, so dass sie bei hohem Sicherheitsstandard elektronisch und insbesondere berührungslos auslesbar sind. Dies bedeutet, dass in diesem Fall dann auch die Nutzdaten bzw. direkten Daten des Ausweisdokuments berührungslos ausgelesen werden können.

Die vorliegende Erfindung wird nun anhand der beigefügten Zeichnungen näher erläutert, in denen zeigen:
- FIG 1: eine Prinzipskizze einer erfindungsgemäßen Kennzeichnungsvorrichtung mit Sende- und Empfangsvorrichtung;
- FIG 2: ein Datenflussdiagramm einer Ausgabestelle für erfindungsgemäße Kennzeichen; und
- FIG 3: ein Datenflussdiagramm zur Verifikation einer erfindungsgemäßen Kennzeichnungsvorrichtung.

Die nachfolgend näher aufgeführten Ausführungsbeispiele stellen bevorzugte Ausführungsformen der vorliegenden Erfindung dar.

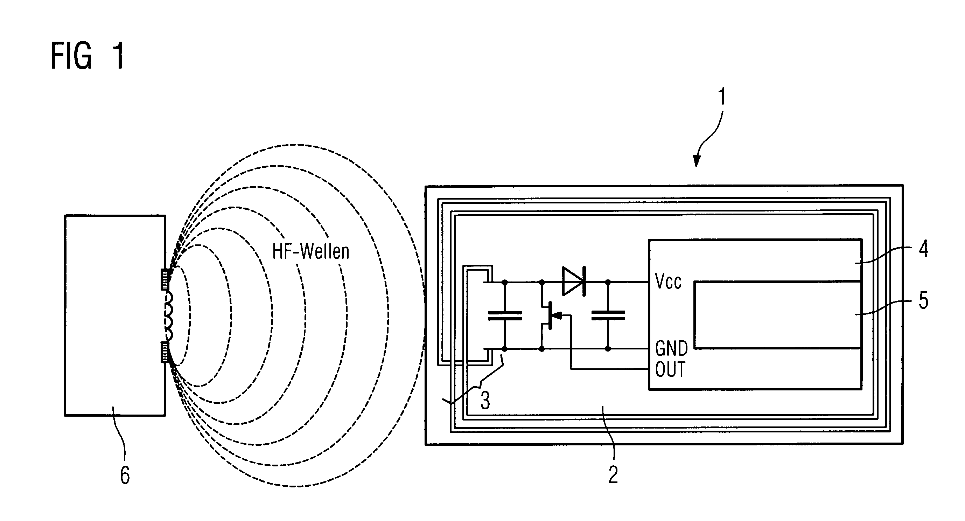

In FIG 1 ist eine Kennzeichnungsvorrichtung 1 für Ausweisdokumente, wie Pässe, Berechtigungsscheinen, Zugangskarten und dergleichen, schematisch dargestellt. Sie besteht aus einem Träger 2, der aus einer Kunststofffolie gefertigt ist. Auf dem Träger 2 ist eine Antenne 3 für einen Transponder aufgebracht. Die Transponder-Steuerung erfolgt über ein übliches Transponder-Chip 4. Die elektrische Beschaltung zwischen dem Transponder-Chip 4 und der Antenne 3 erfolgt auf bekannte Weise.

Der Transponder-Chip 4 beinhaltet einen Datenspeicher 5, in dem eine Bezugsinformation zu den Daten des Ausweisdokuments bzw. der betreffenden Person oder die Daten selbst (z. B. ICAO-Zeilen in einem Pass) gespeichert sind. Derartige Daten wären neben den reinen Ausweisdaten beispielsweise biometrische Daten oder Visumdaten für die Einreise in ein Land als elektronischer Passstempel.

Das Einspeichern und Auslesen von Daten erfolgt mit Hilfe einer Sende-/Leseeinrichtung 6, die mit der Kennzeichnungsvorrichtung 1 in Funkverbindung steht. Daher kann die Kennzeichnungsvorrichtung im vorliegenden Fall als Transponder-RFID-Tag bezeichnet werden, wobei RFID für Radiofrequenzidentifikation steht.

Zur Erhöhung der Sicherheit können die Daten in zwei derartigen Kennzeichnungsvorrichtungen bzw. RFID-Tags (nachfolgend auch Siegel genannt), die unabhängig voneinander sind, gespeichert werden. Das Ausweisdokument besteht dann beispielsweise aus zwei Abschnitten, die jeweils ein Siegel tragen. Durch dieses Datensplitting und entsprechende Verschlüsselung in zwei Speichern kann erhöhte Fälschungssicherheit gewährleistet werden.

In dem oder den jeweiligen Speichern 5 können neben den Ausweisdaten auch ein Bild des Ausweisinhabers beispielsweise im JPG-Format oder ein entsprechender Link auf eine Datenbank abgespeichert sein. Darüber hinaus können noch weitere für die einwandfreie Identifizierung notwendige Daten in dem Speicher vorzugsweise verschlüsselt abgelegt werden. Diese umfassen biometrische Merkmale des Ausweisinhabers, beispielsweise einen Fingerabdruck, eine Struktur des Augenhintergrunds, Gesichtsmerkmale, die Unterschrift, die Stimme, die Handgeometrie oder dergleichen.

Der Pass, d. h. das Ausweisdokument, kann, ohne dass er geöffnet wird, aus einer Entfernung von ca. 40 cm gelesen, und alle Daten einschließlich eines abgespeicherten Bilds können auf einem Bildschirm angezeigt werden. Speziell lassen sich die Siegel von Handgeräten oder von in Durchgangsbereichen fest installierten Geräten automatisch auslesen.

Für die Ausfuhr von Gütern können in dem Siegel auch eine Verknüpfung (Link) zu einem wertvollen Gut abgelegt werden. Dies ist von Bedeutung bei Ein- und Ausfuhren an Grenzübergängen gemäß den Carnet-Bestimmungen. Bei den davon betroffenen Gütern, z. B. Laptops, Maschinen, Waffen, Messgeräte, etc., ist es notwendig, dass das eingeführte Gut mit dem ausgeführten Gut identisch ist.

Ein Siegel kann fallweise mit einer PIN-Kennung ausgestattet sein, um bestimmte private Datenbereiche nur mit Einwilligung des Siegelinhabers freizugeben. Die bekannten TAN-Codes können unter Umständen zum Einsatz kommen, um ein Siegel wieder zu erneuern.

Damit das Siegel bzw. Tag nicht ohne weiteres von dem Ausweisdokument abgelöst werden kann, weist es "Sollbruchstellen" auf, so dass es bei Ablöseversuchen zerstört wird.

Das Siegel bzw. Tag ist sehr flach ausgestaltet und mit einer selbstklebenden Beschichtung ausgestattet. Damit kann es ohne weiteres in einen üblichen Pass eingeklebt werden, der weiterhin in gewohnter Weise gehandhabt werden kann.

Die Oberfläche des Siegels ist bedruckt und/oder bestempelbar. Für den Druck eignet sich beispielsweise ein 2D-Bar-Code.

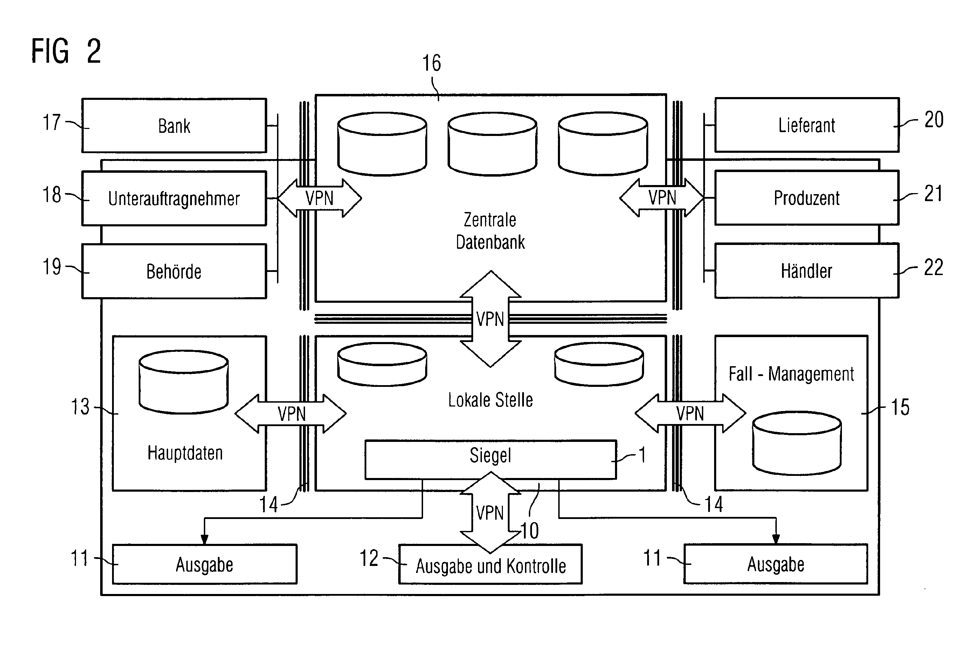

In FIG 2 ist eine Infrastruktur dargestellt, in die das erfindungsgemäße Siegel eingebettet werden kann. Das elektronische Siegel 1, d. h. die erfindungsgemäße Kennzeichnungsvorrichtung, wird von einer lokalen Stelle 10, z. B. einer Passausgabestelle, ausgegeben. Die Ausgabevorgänge sind in FIG 2 mit dem Bezugszeichen 11 gekennzeichnet. Die Ausgabe kann mit einer Kontrolle 12 kombiniert sein. Dementsprechend ist ein bidirektionaler Datenfluss zwischen der Kontrollstelle 12 und der lokalen Stelle 10 notwendig.

Die auf dem Siegel 1 abzuspeichernden Hauptdaten 13 werden der lokalen Stelle über eine VPN-Verbindung (privates Netz) zur Verfügung gestellt. Die Datensicherheit kann hierbei durch eine Firewall 14 erhöhnt werden.

Darüber hinaus kann die lokale Stelle 10 beispielsweise mit einem Polizeirechner verbunden sein, so dass bei der Ausgabe der Siegel 1 das polizeiliche Fall-Management 15 Einfluss nehmen kann.

Zur Verifikation der Echtheit des Siegels 1 können die Siegeldaten auch in einer zentralen Datenbank 16 abgelegt werden. Diese zentrale Datenbank 16 kann einer Regierungsbehörde angegliedert sein. Die Daten in der zentralen Datenbank 16 können gegebenenfalls Banken 17, Unterauftragnehmern 18, Behörden 19 sowie Lieferanten 20, Produzenten 21 und Händlern 22 zur Verfügung gestellt werden. Diese Stellen können aber auch ihrerseits Informationen zur Erstellung und Verwaltung der Daten liefern. Für sämtliche Datenverbindungen wird vorzugsweise eine PKI- und VPN-Infrastruktur verwendet.

Im Hinblick auf funktionelle, informationstechnische, physikalische, kommunikative und organisatorische Systemarchitektur werden die folgenden Verfahren und Einrichtungen durch die vorliegende Erfindung eines sicheren Siegels erst sinnvoll und effektiv nutzbar:
- aktive, gemeinschaftliche Informationsfilter beispielsweise zur schärferen Eingrenzung bei der Rasterfahndung
- einheitliches Treiberdesign für alle Kommunikationen
- abstrakte Datenbank und abstraktes Systemdesign
- einheitliches skalierbares Systemdesign bzw. variable Konfiguration der Systemgröße
- VPN-Kommunikationskanäle für kunden- und auftraggebereigene Daten
- analytische Online-Datenverarbeitung OLAP in einem objektorientierten Datenbankmanagementsystem ORDBM und mehrdimensionale Datenspeicher DAS (multidimensional data warehouse) sowie diesbezügliche Softwaremodule
- ein kleines, intrinsisch verteiltes Echtzeit-(Sub)-System für kritische Ausgabeprozesse
- hybride Systemkonfiguration (Dual Use of System) und
- Integration des Fall-Managements beispielsweise der Polizei

Da die Daten in einem zentralen System 6 vorgehalten werden können, können elektronische, virtuelle Berechtigungen, z. B. die Berechtigung zur Einreise in ein Land, vergeben werden. D. h. das System verfügt über sichtbare und unsichtbare Sicherheitsmerkmale. Derartige virtuellen Berechtigungen können auf einfache Weise in dem zentralen System wieder gelöscht werden.

Die Verwendung von sicheren Siegeln wäre nicht nur für Behörden und Organisationen von großer Bedeutung, sondern auch für sonstige sensible Einrichtungen, bei denen Zugangsberechtigungen vergeben werden oder Personen- oder Güteridentifikation erforderlich ist.

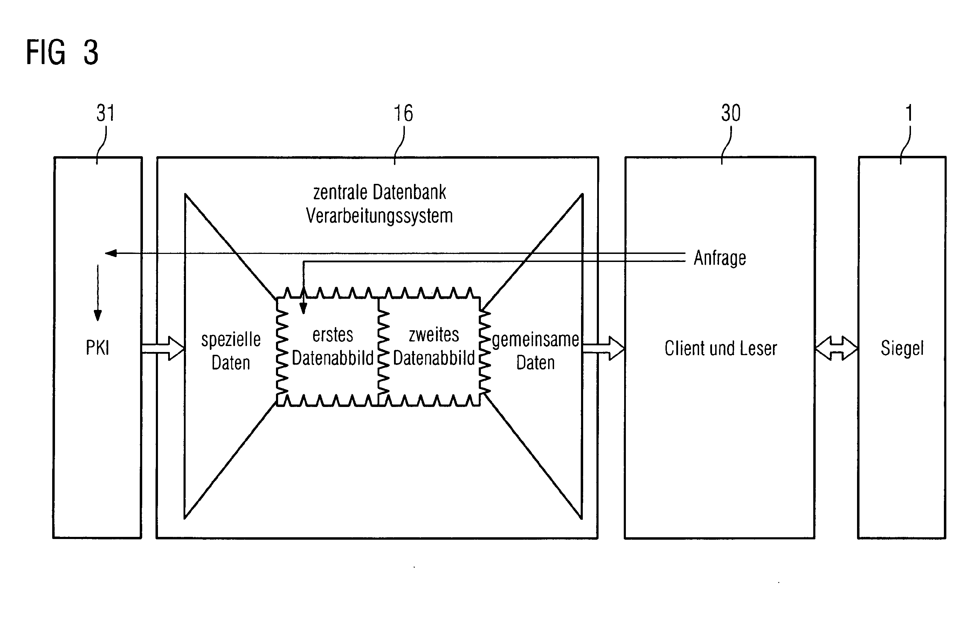

Die Daten des Siegels können gemäße dem Schema von FIG 3 verifiziert werden. Dementsprechend werden die Daten eines Siegels 1 von einem Lesegerät, das in einen Client 30 integriert ist, erfasst. Der Client 30 stellt eine Anfrage über eine PKI-Infrastruktur 31 an die zentrale Datenbank 16. Dort wird ein erstes Datenabbild, das den Daten des Siegels 1 entspricht, mit einem zweiten Datenabbild, das in der zentralen Datenbank 16 hinterlegt ist, verglichen. D. h. die speziellen Daten werden mit den gemeinsam hinterlegten Daten verglichen.

Der Client 16 erhält über das Vergleichsergebnis eine entsprechende Antwort in Form eines Zertifikats.

Das Scannen bzw. Erfassen der Daten kann über ein Wireless Lan und Accesspoints über GPRS oder Fahrzeugen und anderen öffentlichen Accesspoints jederzeit und an beliebigen Orten erfolgen. Somit können Personenkontrollen sowie Kontrollen von Dokumenten, die sich auf Güter beziehen können, sicher und automatisiert vorgenommen werden und Kontrollen in der üblichen Art entfallen oder ergänzt werden.

Da das Siegel aus der Entfernung und berührungslos ohne Öffnen des Passes lesbar ist, können beispielsweise an einer Grenze alle Daten einschließlich eines Bilds gleichzeitig mit der Anzeige am Terminal über entsprechende Datenübertragungswege für den Abgleich in ein im Hintergrund laufendes zentrales Datenhaltungssystem eingelesen werden. Vorzugsweise kann die im Hintergrund laufende Softwareanwendung leicht in eine bestehende Client-Server-Infrastruktur eingebunden werden. Außer den Lesern und Clients ist damit keine weitere Hardware notwendig.

Bei der Verifikation der Daten des Siegels ist es zweckmäßig, sogenannte Hash-Code-Mechanismen zu verwenden. Dadurch kann der Vergleich von Datenabbildern sehr rasch vollzogen werden.

Folgende Sicherheitsprinzipien sollten durchführbar oder berücksichtigbar sein:
- "Privacy": Aus Datenschutzgründen wird eine Verschlüsselung durchgeführt.
- "Non-repudiation": Die Daten stammen tatsächlich von dem angegebenen Autor.
- "Authentication": Die Daten stammen von der angegebenen Quelle.
- "Integrity": Die Daten sind nicht verfälscht.
- "Verification": Die Daten sind gemäß einer Vergleichsoperation echt.

Speziell können hinsichtlich der Sicherheit bei der Datenübertragung folgende Verfahren angewandt werden:
- asymmetrische Verschlüsselung
- digitale Unterschrift
- Zertifikate
- PIN- und TAN-Codes
- Dateisystem-Sicherheit (z. B. Verschlüsselung auf der Platte)
- Hash-Code-Mechanismen bei der Erzeugung von Datenschlüsseln

Hinsichtlich der sicheren Gestaltung des Siegels können unter anderem folgende Verfahren eingesetzt werden:
- Fotolamination
- Unterschriftsstreifen
- Hologramme
- Mikrodruckverfahren
- Lasergravur
- Reliefbildung
- Sicherheitsmuster

Die obigen Ausführungsbeispiele wurden stets in Zusammenhang mit einem Transponder zur Datenübertragung geschildert. Anstelle des Transponders oder zusätzlich zu diesem können aber auch Oberflächenwellen-Elemente auf bzw. an dem Siegel angebracht werden. Auch sie lassen sich berührungslos auslesen, so dass eine automatische Datenerfassung und Verifikation möglich ist.

## Patentansprüche

1. Kennzeichnungsvorrichtung zum Aufbringen auf ein Ausweisdokument
**gekennzeichnet durch**
- eine Trägereinrichtung (2), die an dem Ausweisdokument befestigbar ist, zum Tragen von Elektronikkomponenten,
- eine Speichereinrichtung (5), die in oder an der Trägereinrichtung (2) angebracht ist, zum Speichern von direkten und/oder indirekten Daten über das Ausweisdokument und von Zusatzdaten und
- eine Übertragungseinrichtung (3, 4), die in oder an der Trägereinrichtung (2) angebracht ist, zum drahtlosen Einund Auslesen von Daten aus der Speichereinrichtung (5).

2. Kennzeichnungsvorrichtung nach Anspruch 1, wobei die Daten eine Abbildung des Ausweisdokuments oder eines Teils des Ausweisdokuments oder eine Bezugsinformation zu dieser Abbildung umfassen.

3. Kennzeichnungsvorrichtung nach Anspruch 1 oder 2, wobei die Zusatzdaten biometrische Daten über die betreffende Person und/oder Visadaten umfassen.

4. Kennzeichnungsvorrichtung nach einem der vorhergehenden Ansprüche, wobei die Zusatzdaten Bezugsinformationen über eine Beziehung des Ausweisdokuments zu einem externen Objekt, insbesondere zu einem beweglichen Gut, umfassen.

5. Kennzeichnungsvorrichtung nach einem der vorhergehenden Ansprüche, wobei die Zusatzdaten Daten über den Ausstellungsprozess des Ausweisdokuments und/oder eines Visums umfassen.

6. Kennzeichnungsvorrichtung nach einem der vorhergehenden Ansprüche, wobei die in der Speichereinrichtung gespeicherten Daten verschlüsselt sind.

7. Kennzeichnungsvorrichtung nach einem der vorhergehenden Ansprüche, wobei die Kennzeichnungsvorrichtung mehrteilig ist, jedes Teil jeweils eine Träger-, Speicher- und Übertragungseinrichtung umfasst und die zu speichernden Daten auf die mehreren Teile aufgeteilt sind.

8. Kennzeichnungsvorrichtung nach einem der vorhergehenden Ansprüche, wobei die Übertragungseinrichtung (3, 4) einen passiven Transponder umfasst.

9. Kennzeichnungsvorrichtung nach einem der vorhergehenden Ansprüche, wobei die Trägereinrichtung (2) mindestens eine Sollbruchstelle aufweist, so dass sie beim Ablösen von dem Ausweisdokument zerstört oder beschädigt wird.

10. Kennzeichnungsvorrichtung nach einem der vorhergehenden Ansprüche, wobei die Trägereinrichtung (2) im Wesentlichen aus einem Kunststofffolienmaterial besteht.

11. Kennzeichnungsvorrichtung nach einem der vorhergehenden Ansprüche, die eine Kennzeichnungsfläche aufweist, welche an der Oberfläche der Trägereinrichtung (2) angeordnet ist, um die Kennzeichnungsvorrichtung optisch zu kennzeichnen.

12. Kennzeichnungsvorrichtung nach Anspruch 11, wobei die Kennzeichnungsfläche bedruckbar und/oder bestempelbar ist.

13. Kennzeichnungsvorrichtung nach Anspruch 11 oder 12, wobei auf der Kennzeichnungsfläche ein 2D-Bar-Code und/oder ein Hologramm aufgebracht ist.

14. Kennzeichnungsvorrichtung nach einem der vorhergehenden Ansprüche, wobei die Trägereinrichtung (2) selbstklebend ist.

15. Kennzeichnungsvorrichtung nach einem der vorhergehenden Ansprüche, die in eine PKI- und/oder VPN-Infrastruktur integrierbar ist.

16. Verfahren zum Kennzeichnen eines Ausweisdokuments **gekennzeichnet durch**
- Speichern von direkten und/oder indirekten Daten über das Ausweisdokument und von Zusatzdaten in einer Speichereinrichtung (5), die in oder an einer Trägereinrichtung (2) angebracht ist und die drahtlose Datenkommunikation ermöglicht, und
- Befestigen der Trägereinrichtung an dem Ausweisdokument.

17. Verfahren nach Anspruch 16, wobei die Daten eine Abbildung des Ausweisdokuments oder eines Teils des Ausweisdokuments oder eine Bezugsinformation zu dieser Abbildung umfassen.

18. Verfahren nach Anspruch 16 oder 17, wobei die Zusatzdaten biometrische Daten über die betreffende Person und/oder Visadaten umfassen.

19. Verfahren nach einem der Ansprüche 16 bis 18, wobei die Zusatzdaten Bezugsinformationen über eine Beziehung des Ausweisdokuments zu einem externen Objekt, insbesondere zu einem beweglichen Gut, umfassen.

20. Verfahren nach einem der Ansprüche 16 bis 19, wobei die Zusatzdaten Daten über den Ausstellungsprozess des Ausweisdokuments und/oder eines Visums umfassen.

21. Verfahren nach einem der Ansprüche 16 bis 20, wobei die Daten verschlüsselt übertragen werden.

22. Verfahren nach einem der Ansprüche 16 bis 21, wobei die in der Speichereinrichtung gespeicherten Daten auch in einem zentralen Datenhaltungssystem (16) abgelegt werden.

23. Verfahren nach einem der Ansprüche 16 bis 22, wobei das Ausweisdokument von einer Stelle eines ersten Landes oder einer ersten Organisation ausgegeben und von einer Stelle eines zweiten Landes oder einer zweiten Organisation entsprechend den Ansprüchen 16 bis 22 gekennzeichnet wird.
